# EUROPÄISCHE PATENTSCHRIFT

(11) **EP 2 825 278 B1**
(45) Veröffentlichungstag und Bekanntmachung des Hinweises auf die Patenterteilung: **11.07.2018**
(21) Anmeldenummer: 13703394.0
(22) Anmeldetag: 07.02.2013
(51) Int. Cl.: B01D 35/18, B01D 36/00, B01D 29/60

(54) **KRAFTSTOFFFILTER EINER BRENNKRAFTMASCHINE UND HEIZ-SENSOR-MODUL EINES KRAFTSTOFFFILTERS**
FUEL FILTER OF AN INTERNAL COMBUSTION ENGINE AND HEATING SENSOR MODULE OF A FUEL FILTER
FILTRE À CARBURANT POUR MOTEUR À COMBUSTION INTERNE ET MODULE DE CAPTEUR DE CHAUFFAGE DE FILTRE À CARBURANT

(30) Priorität: 16.03.2012 DE 102012005206
(43) Veröffentlichungstag der Anmeldung: 21.01.2015
(73) Patentinhaber: Mann+Hummel GmbH, 71636 Ludwigsburg (DE)
(72) Erfinder: STURGESS, Christopher, Marc, 70825 Korntal (DE)
(86) Internationale Anmeldenummer: PCT/EP2013/052467
(87) Internationale Veröffentlichungsnummer: WO 2013/135440

(56) Entgegenhaltungen:
- EP-A1- 0 400 223
- EP-A1- 1 188 468
- DE-A1-102006 060 128
- DE-U1-202006 001 950
- FR-A1- 2 868 331

## Beschreibung

### Technisches Gebiet

Die Erfindung betrifft einen Kraftstofffilter, insbesondere Dieselkraftstofffilter, einer Brennkraftmaschine insbesondere eines Kraftfahrzeugs, mit einem Filtergehäuse, welches wenigstens einen Einlass für den zu reinigenden Kraftstoff und wenigstens einen Auslass für den gereinigten Kraftstoff aufweist und in dessen Innenraum ein Filterelement so angeordnet ist, dass es den wenigstens einen Einlass von dem wenigstens einen Auslass trennt, mit wenigstens einer Heizeinrichtung zur Erwärmung des Kraftstoffs, mit wenigstens einem Temperatursensor zur Erfassung einer Temperatur des Kraftstoffs und mit wenigstens einem Wasserstandssensor zur Erfassung eines Wasserstandes von aus dem Kraftstoff abgeschiedenem Wassers in einem Wassersammelraum, wobei die wenigstens eine Heizeinrichtung, der wenigstens eine Temperatursensor und der wenigstens eine Wasserstandssensor in einem Heiz-Sensor-Modul integriert sind.

Die Erfindung betrifft ferner ein Heiz-Sensor-Modul eines Kraftstofffilters, insbesondere Dieselkraftstofffilter, einer Brennkraftmaschine insbesondere eines Kraftfahrzeugs, mit wenigstens einer Heizeinrichtung zur Erwärmung des Kraftstoffs, mit wenigstens einem Temperatursensor zur Erfassung einer Temperatur des Kraftstoffs, mit wenigstens einem Wasserstandssensor zur Erfassung eines Wasserstandes von abgeschiedenem Wasser in einem Wassersammelraum.

### Stand der Technik

Aus der EP 1 702 662 A1 ist ein Filtersystem für Kraftstoff einer Brennkraftmaschine eines Kraftfahrzeugs bekannt. Das Filtersystem weist eine elektrische Heizeinrichtung zur Erwärmung des Kraftstoffs auf. Das Filtersystem weist ferner ein Filtergehäuse mit einem Innenraum auf, in dem ein Filterelement angeordnet ist. Das Filterelement trennt einen Einlass für den Kraftstoff von einem Auslass. Die Heizeinrichtung für die Flüssigkeit ist abnehmbar und dicht an dem Filtergehäuse montiert. Eine Platte der Heizeinrichtung ragt in einen stromaufwärtigen Bereich des Gehäuseinnenraums hinein, der von dem Filterelement umgrenzt wird. Die Platte trägt mehrere Heizelemente der Heizeinrichtung. Die Platte kann als Elektronikkarte realisiert sein, die ein Substrat umfasst, auf dem ein oder mehrere Heizbahnen aufgedruckt sind. Das Substrat umfasst ebenfalls eine Selbstregulierung, die beispielsweise mittels einem Leistungstransistor und einem Steuerstromkreis realisiert ist, dessen Messsystem ein Widerstand mit einem negativen Temperaturkoeffizienten ist. In seinem unteren Abschnitt weist die Elektronikkarte zwei Kupferplatten auf, die in einem Wassersammelraum angeordnet sind. Mit den Kupferplatten wird ein Wasserstandssensor für den Wasserstand am Boden des Gehäuses realisiert.

Die DE 10 2006 060 128 A1 zeigt einen Kraftstofffilter eines Fahrzeug-Verbrennungsmotors mit einem Filtergehäuse, das ein topfförmiges Gehäuseteil und einen mit diesem dicht verbundenen Deckel umfasst, einem innerhalb des Filtergehäuses gelagerten, von radial außen nach innen durchströmten Ringfiltereinsatz, je einen gegenüber der Mittelachse des Filtergehäuses radial versetzt angeordneten Zu- und Abführstutzen für den das Filter durchströmenden Kraftstoff, einer durch ein Filtermedium des Ringfiltereinsatzes bewirkten Teilung des Gehäuseinneren in einen Filterroh- und -reinraum, einem rein- oder rohseitig bei Einbaulage des Filters unten liegenden Aufnahmeraum für aus dem Kraftstoff innerhalb des Filters abgeschiedenes Wasser, einem mit dem Zuführstutzen kommunizierenden Kraftstoff-Zuführkanal, der das filtermediumfreie Zentrum des Ringfiltereinsatzes zumindest teilweise als Bestandteil einer in einer zentralen Öffnung des Deckels lösbar dicht gelagerten Stabeinrichtung durchgreift.
Der Erfindung liegt die Aufgabe zugrunde, einen Kraftstofffilter und ein Heiz-Sensor-Modul der eingangs benannten Art zu gestalten, der/das möglichst kompakt aufgebaut ist und mit dem der Kraftstoff möglichst einfach, effizient und kontrolliert temperiert werden kann.

### Offenbarung der Erfindung

Diese Aufgabe wird erfindungsgemäß dadurch gelöst, dass wenigstens ein Heizelement der Heizeinrichtung in einer Heizkammer angeordnet ist, die sich außerhalb des Innenraums des Filtergehäuses bezüglich einer Kraftstoffströmung zwischen dem Einlass und einer Rohseite des Filterelements befindet und die mit einem Modulgehäuse des Heiz-Sensor-Moduls mit begrenzt wird.

Erfindungsgemäß ist also eine separate Heizkammer stromaufwärts eines rohseitigen Zulaufraums des Filtergehäuses angeordnet. Der rohseitige Zulaufraum befindet sich im Innenraum des Filtergehäuses. Je nach Durchströmungsrichtung des Filterelements kann der Zulaufraum innerhalb oder außerhalb des Filterelements angeordnet sein und an dessen Rohseite angrenzen. In der Heizkammer befindet sich das wenigstens eine Heizelement. Der dem Filtergehäuse zuströmende Kraftstoff passiert die Heizkammer und kann dort möglichst gleichmäßig erwärmt werden, bevor er in den Zulaufraum zur Rohseite des Filterelements gelangt. Vorteilhafterweise kann das wenigstens eine Heizelement in einem Hauptströmungsweg des Kraftstoffs angeordnet sein. So kann der Kraftstoff an dem wenigstens einen Heizelement entlang strömen und mit diesem effizient erwärmt werden. Durch die Erwärmung kann die Viskosität des Kraftstoffs reduziert werden, so dass dieser vor dem Kontakt mit dem Filterelement die notwendige Fließfähigkeit hat. Eine Druckdifferenz zwischen der Rohseite und der Reinseite des Filterelements kann so verringert werden. In dem Heiz-Sensor-Modul können vorteilhafterweise alle elektrischen und elektronischen Bauteile angeordnet sein, die für den Betrieb der Heizeinrichtung, des Temperatursensors und des Wasserstandssensors erforderlich sind. Vorteilhafterweise kann in dem Heiz-Sensor-Modul auch eine Steuerelektronik für die Heizeinrichtung, den wenigstens einen Temperatursensor und/oder den wenigstens einen Wasserstandssensor integriert sein. Die elektrischen und elektronischen Bauteile können auf diese Weise einfach elektrisch von dem Filtergehäuse getrennt sein. Vorzugsweise können Sie gegenüber dem Filtergehäuse elektrisch isoliert sein. Das Heiz-Sensor-Modul bildet eine geschlossene Funktionseinheit. Das Heiz-Sensor-Modul kann separat vorgefertigt und kalibriert werden. Elektrische Anschlüsse für die elektrischen und elektronischen Bauteile können direkt an einem Modulgehäuse des Heiz-Sensor-Moduls angeordnet sein. Das Heiz-Sensor-Modul kann einfach an oder in dem Filtergehäuse montiert werden. Es kann vorteilhafterweise lösbar, insbesondere mittels einer Schraubverbindung, einer Steckverbindung oder einer Klipsverbindung, mit dem Filtergehäuse verbunden werden. Es kann auch fest mit dem Filtergehäuse verbunden sein. Im Filtergehäuse sind keine separaten Montageöffnungen oder Durchlassöffnungen für die Heizeinrichtung, den wenigstens einen Temperatursensor oder den wenigstens einen Wasserstandssensor oder deren Zuleitungen erforderlich. Eine Montageöffnung für das Heiz-Sensor-Modul kann einfach realisiert werden. Die Montageöffnung kann einfach abgedichtet werden. Das Modulgehäuse kann vorteilhafterweise mittels einer Dichteinrichtung gegen die Außenseite des Filtergehäuses, insbesondere eine Aufnahme des Filtergehäuses, die die Heizkammer mit begrenzt, abgedichtet sein. Das Modulgehäuse und das Filtergehäuse können aus unterschiedlichen Materialien sein. Der wenigstens eine Temperatursensor kann vorteilhafterweise einen Widerstand mit einem negativen Temperaturkoeffizienten (NTC-Widerstand) aufweisen. Der wenigstens eine Wasserstandssensor kann vorteilhafterweise am Ende eines Stabes des Heiz-Sensor-Moduls angeordnet sein, welcher von dem Modulgehäuse durch eine entsprechende Öffnung durch den Innenraum des Filtergehäuses bis zu einem Wassersammelraum am Boden des Filtergehäuses führt. Die Öffnung für den Stab kann vorteilhafterweise mittels einem Dichtring gegen den Stab abgedichtet sein. Der Dichtring kann vorteilhafterweise in einer entsprechenden Dichtungsnut im Stab angeordnet sein. Der wenigstens eine Einlass kann vorteilhafterweise am Filtergehäuse angeordnet sein. Ebenso kann der wenigstens eine Auslass vorteilhafterweise am Filtergehäuse angeordnet sein. So ist am Heiz-Sensor-Modul selbst kein Einlass und/oder Auslass erforderlich. Das Heiz-Sensor-Modul kann mit unterschiedlichen Bautypen von Filtergehäusen verbunden werden. Umgekehrt kann ein Filtergehäuse eines Bautyps mit unterschiedlichen Bautypen von Heiz-Sensor-Modulen ausgestattet werden. Vorteilhafterweise kann das Filterelement austauschbar im Filtergehäuse angeordnet sein. Das Filtergehäuse kann hierzu öffenbar sein. Alternativ kann der Kraftstofffilter als Wechselfilterelement realisiert sein, bei dem das Filtergehäuse nur gemeinsam mit dem Filterelement ausgetauscht werden kann. Vorteilhafterweise kann das Filterelement ein Rundfilterelement sein, das koaxial zu einer Filterachse aufgebaut ist. Vorteilhafterweise kann das Filterelement ein umfangsmäßig geschlossenes, zickzackförmig gefaltetes Filtermedium aufweisen, welches an seinen Stirnseiten Endscheiben aufweist.

Bei einer vorteilhaften Ausführungsform kann der wenigstens eine Temperatursensor in der Nähe des wenigstens einen Einlasses, vorzugsweise in der Heizkammer, insbesondere bezüglich des Strömungsweges des Kraftstoffs in der Heizkammer näher an dem wenigstens einen Einlass als an einer Auslassöffnung der Heizkammer, angeordnet sein. Auf diese Weise kann die Genauigkeit bei der Bestimmung der Temperatur des eintretenden Kraftstoffs verbessert werden. Auf Basis der Temperaturbestimmung kann die Heizeinrichtung optimal und effizient angesteuert werden, um die Kraftstofftemperatur möglichst genau einzustellen. Der wenigstens eine Temperatursensor kann vorteilhafterweise im Bereich von wenigstens einem Heizelement der Heizeinrichtung angeordnet sein. Er kann aber auch entfernt von dem wenigstens einen Heizelement angeordnet sein. Es können auch mehrere Temperatursensoren an unterschiedlichen Orten vorgesehen sein.

Bei einer weiteren vorteilhaften Ausführungsform kann wenigstens ein Heizelement der Heizeinrichtung in Sandwichbauweise realisiert sein. Dabei können insbesondere zwei kraftaufnehmende Deckschichten vorgesehen sein, zwischen denen eine Heizschicht angeordnet ist. Es können aber auch zwei Heizschichten vorgesehen sein, welche beiderseits einer kraftaufnehmenden Deckschicht angeordnet sind. Es können auch mehr als insgesamt drei Schichten vorgesehen sein. Durch die Sandwichbauweise kann eine im Verhältnis zum Gesamtplatzbedarf des wenigstens einen Heizelements große zur Wärmeübertragung aktive Oberfläche realisiert werden, mit der der zu erwärmende Kraftstoff in Kontakt treten kann. Eine Anströmung des wenigstens einen Heizelements und eine Wärmeübertragung von dem wenigstens einen Heizelement auf den Kraftstoff kann so verbessert werden. Die Sandwichbauweise verbessert darüber hinaus die Gestaltungsmöglichkeiten, insbesondere eine Freiheit der Formgebung, des wenigstens einen Heizelements. Das wenigstens eine Heizelement kann für die Wärmeübertragung günstig in der Heizkammer platziert werden.

Vorteilhafterweise kann wenigstens ein Heizelement der Heizeinrichtung einen für den zu erwärmenden Kraftstoff labyrinthartig durchströmbaren Aufbau haben. Auf diese Weise kann platzsparend ein Strömungsweg, entlang dem der Kraftstoff mit dem wenigstens einen Heizelement in Berührung steht, vergrößert werden. So kann die Dauer des Wärmekontaktes verlängert und die Wärmeübertragung verbessert werden.

Bei einer weiteren vorteilhaften Ausführungsform kann das Modulgehäuse des Heiz-Sensor-Moduls elektrisch nicht leitfähig sein. Auf diese Weise können die elektrischen und elektronischen Bauteile im Heiz-Sensor-Modul einfach gegen das Filtergehäuse elektrisch isoliert werden. Vorteilhafterweise kann das Filtergehäuse selbst aus einem leitfähigen Material, insbesondere einem leitfähigen Kunststoff sein. So kann das Filtergehäuse vorteilhaft eine elektrische Aufladung verhindern, da durch eine Aufladung ein Funke zum Beispiel auf kraftstoffführende Komponenten überspringen könnte, was eine große Brandgefahr bedeuten würde. Das Filtergehäuse kann statt aus einem Kunststoff auch aus einem andersartigen Material, insbesondere einem Metall, sein. In dem elektrisch nicht leitfähigen Modulgehäuse des Heiz-Sensor-Moduls können die elektrischen Bauteile, insbesondere die Heizeinrichtung, der Temperatursensor und der Wasserstandssensor, einfach gegeneinander und gegen das Filtergehäuse elektrisch isoliert sein.

Vorteilhafterweise kann das Heiz-Sensor-Modul im Einbauzustand des Kraftstofffilters vorzugsweise von oben in oder auf eine Aufnahme des Filtergehäuses gesteckt oder gelegt sein. Des Weiteren kann vorteilhafterweise das Filtergehäuse von unten öffenbar sein. Auf diese Weise kann das Filtergehäuse insbesondere zu Wartungszwecken oder zum Austausch des Filterelements geöffnet werden, ohne dass das Heiz-Sensor-Modul dabei stört oder gar entfernt werden muss. Eine Montage des Heiz-Sensor-Moduls von oben hat darüber hinaus den Vorteil, dass die Abdichtung des Heiz-Sensor-Moduls gegen das Filtergehäuse vereinfacht werden kann, da in das Filtergehäuse eintretender Kraftstoff aufgrund der Schwerkraft nach unten fließt, und so die Dichtung oben weniger belastet wird.

Vorteilhafterweise kann das Heiz-Sensor-Modul wenigstens eine elektrische Anschlusseinrichtung für elektrische Versorgungsleitungen und/oder Signalleitungen der wenigstens einen Heizeinrichtung, des wenigstens einen Temperatursensors und des wenigstens einen Wasserstandssensors, insbesondere für elektrische Versorgungsleitungen und/oder Signalleitungen einer Steuerelektronik der wenigstens einen Heizeinrichtung, des wenigstens einen Temperatursensors und/oder des wenigstens einen Wasserstandssensors, die in dem Modulgehäuse angeordnet ist, aufweisen. Auf diese Weise können einfach, bevorzugt mit einer einzigen Anschlusseinrichtung, alle elektrischen Leitungen über entsprechende Verbindungsleitungen insbesondere mit einer Motorsteuerung der Brennkraftmaschine verbunden werden. Es können auch mehrere Anschlusseinrichtungen vorgesehen sein. Die wenigstens eine Anschlusseinrichtung kann vorteilhafterweise einen Stecker oder eine Buchse aufweisen. Die wenigstens eine Anschlusseinrichtung kann so ausgestaltet sein, dass sie ein Drehen des Heiz-Sensor-Moduls im oder am Filtergehäuse ermöglicht. So kann das Heiz-Sensor-Modul so positioniert werden, dass der wenigstens eine Temperatursensor optimal in der Heizkammer, vorzugsweise im Bereich des wenigstens einen Einlasses, angeordnet ist. Vorteilhafterweise können hierzu Positionierhilfen, insbesondere Positioniernasen oder Stifte, am Modulgehäuse und am Filtergehäuse vorgesehen sein.

Die technische Aufgabe wird ferner erfindungsgemäß mit dem Heiz-Sensor-Modul dadurch gelöst, dass ein Modulgehäuse des Heiz-Sensor-Moduls ausgestaltet ist, um eine Heizkammer außerhalb eines Innenraums eines Filtergehäuses des Kraftstofffilters an einer Außenseite des Filtergehäuses mit zu begrenzen, die bezüglich einer Kraftstoffströmung zwischen einem Einlass und einer Rohseite eines Filterelements des Kraftstofffilters angeordnet ist, und wenigstens ein Heizelement der Heizeinrichtung so an dem Modulgehäuse angeordnet ist, dass es sich bei montiertem Heiz-Sensor-Modul in der Heizkammer befindet. Die oben im Zusammenhang mit dem erfindungsgemäßen Kraftstofffilter aufgezeigten Vorteile und Merkmale gelten für das erfindungsgemäße Heiz-Sensor-Modul und dessen vorteilhafte Ausführungsformen entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Längsschnitt durch eine Filterachse eines Kraftstofffilters für Dieselkraftstoff mit einem Heiz-Sensor-Modul;
- Figur 2: eine Detailansicht des Kraftstofffilters im Bereich eines Modulgehäuses des Heiz-Sensor-Moduls, wobei das Filtergehäuse und ein Rundfilterelement in einer Schnittebene parallel zur Filterachse durch einen Einlass des Kraftstofffilters geschnitten ist;
- Figur 3: der Kraftstofffilter aus den Figuren 1 und 2 ohne Rundfilterelement, wobei das Filtergehäuse außerhalb der Filterachse geschnitten ist;
- Figur 4: eine isometrische Darstellung des Heiz-Sensor-Moduls des Kraftstofffilters aus den Figuren 1 bis 3.

In den Figuren sind gleiche Bauteile mit gleichen Bezugszeichen versehen.

### Ausführungsform(en) der Erfindung

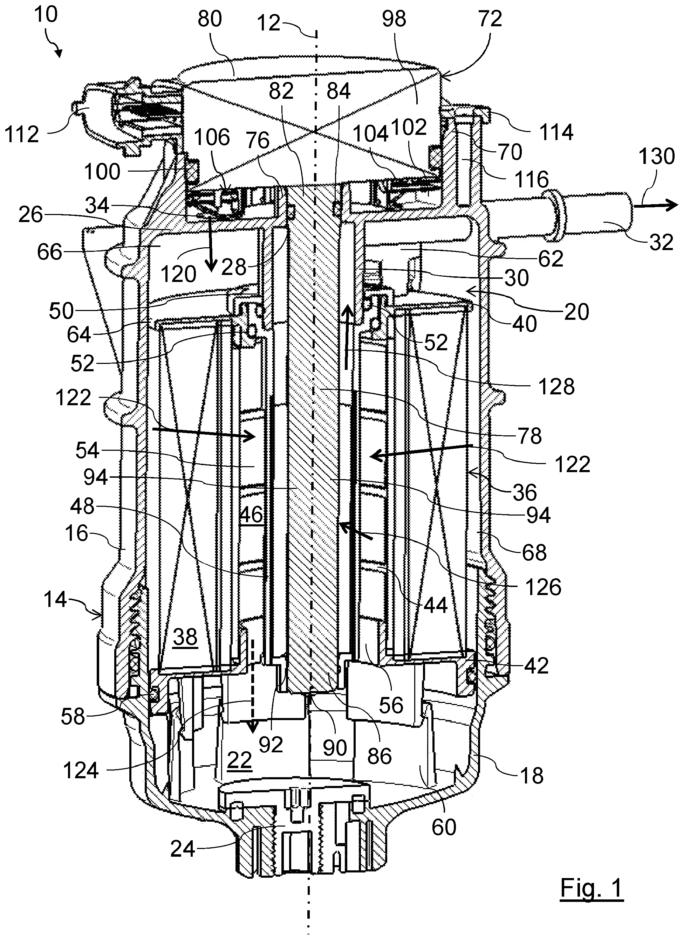

In Figur 1 ist ein Kraftstofffilter 10 für Dieselkraftstoff einer Brennkraftmaschine eines Kraftfahrzeugs in einem Längsschnitt durch eine gedachte Filterachse 12 gezeigt.

Der Kraftstofffilter 10 umfasst ein Filtergehäuse 14, welches öffenbar aus einem Filtertopf 16 und einem Filterdeckel 18 zusammengesetzt ist. Das Filtergehäuse 14 ist aus einem elektrisch leitfähigen Kunststoff. In der üblichen Einbauposition des Kraftstofffilters 10, die in Figur 1 gezeigt ist, ist die offene Seite des Filtertopfs 16 nach unten gerichtet. Der Filterdeckel 18 weist ein Außengewinde auf, welches in ein entsprechendes Innengewinde des Filtertopfs 16 eingeschraubt ist. Auf diese Weise kann der Filterdeckel 18 von dem Filtertopf 16 abgeschraubt werden, sodass ein Innenraum 20 des Filtergehäuses 14 von unten zugänglich ist.

Der Filterdeckel 18 ist etwa becherförmig und bildet den Boden des Filtergehäuses 14. Am Boden des Filterdeckels 18 befindet sich ein Wassersammelraum 22 für vom Kraftstoff abgeschiedenes Wasser. In dem Boden des Filterdeckels 18 ist eine hier nicht weiter interessierende Ablassvorrichtung 24 für im Wassersammelraum 22 gesammeltes Wasser angeordnet.

Der Filtertopf 16 weist auf seiner dem Filterdeckel 18 abgewandten Stirnseite eine Trennwand 26 auf, welche gewissermaßen den in der dargestellten normalen Einbauposition oben liegenden Boden des Filtertopfs 16 bildet. In der Trennwand 26 befindet sich eine zur Filterachse 12 koaxiale Durchstecköffnung 28. Die Durchstecköffnung 28 ist auf der dem Filterdeckel 18 zugewandten Innenseite der Trennwand 26 von einem zylinderförmigen Auslassstutzen 30 umgeben. Der Auslassstutzen 30 ist koaxial zur Filterachse 12. Er ist einstückig mit der Trennwand 26 verbunden. Durch eine Umfangswand des Auslassstutzens 30 führt ein Auslassrohr 32. Das Auslassrohr 32 führt durch den Innenraum 20 des Filtergehäuses 14 und durch die Umfangswand des Filtertopfs 16 hindurch. Das Auslassrohr 32 mündet mit einem Ende in einen Innenraum des Auslassstutzens 30. Mit seinem anderen Ende ist das Auslassrohr 32 außerhalb des Filtergehäuses 14 mit einer hier nicht weiter interessierenden Kraftstoffableitung verbunden.

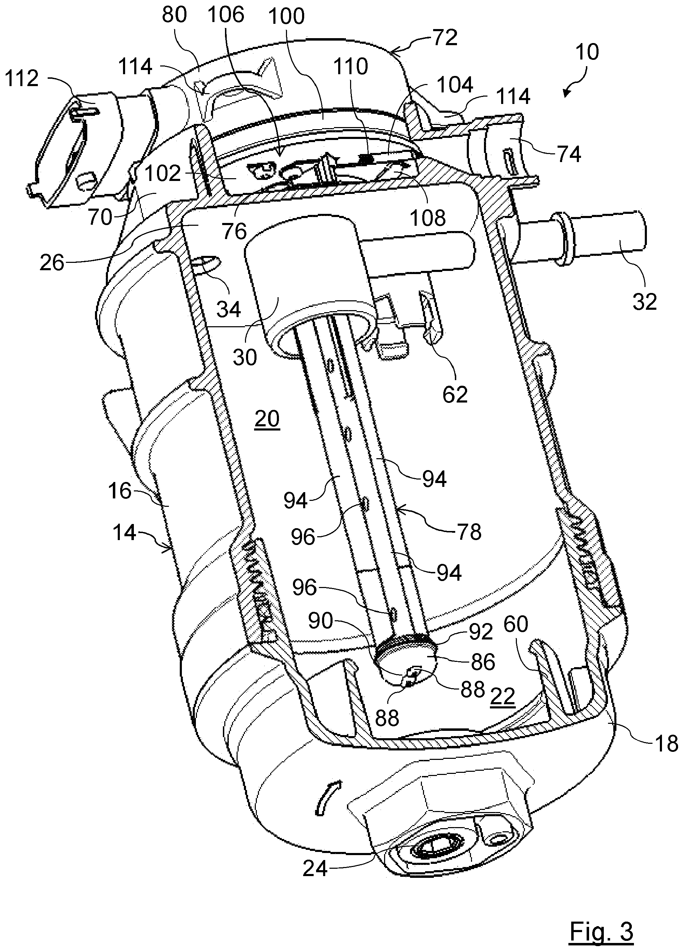

Radial außerhalb des Auslassstutzens 30 und der Durchstecköffnung 28 führt eine Einlassöffnung 34 für Kraftstoff durch die Trennwand 26. Die Einlassöffnung 34 ist insbesondere in Figur 3 gezeigt.

In dem Filtergehäuse 14 ist ein Rundfilterelement 36 austauschbar angeordnet. Das Rundfilterelement 36 verfügt über ein zickzackförmig gefaltetes, umfangsmäßig geschlossenes Filtermedium 38, welches koaxial zur Filterachse 12 aufgebaut ist. An seinen Stirnseiten ist das Filtermedium 38 oben mit einer anschlussseitigen Endscheibe 40 und unten mit einer bodenseitigen Endscheibe 42 dicht verbunden. Ein skelettartiges Stützrohr 44 erstreckt sich in einem von dem Filtermedium 38 umgebenen Innenraum 46 des Rundfilterelements 36 koaxial zur Filterachse 12 zwischen den beiden Endscheiben 40 und 42 und ist mit diesen jeweils fest verbunden. Die radial inneren Faltkanten des Filtermediums 38 liegen an einer radial äußeren Umfangsseite des Stützrohrs 44 an.

Ferner ist in dem Innenraum 46 des Rundfilterelements 36 ein zur Filterachse 12 koaxiales Abscheiderohr 48 für im Kraftstoff etwa mitgeführtes Wasser angeordnet. Eine Umfangswand des Abscheiderohrs 48 ist aus einem hydrophoben Material, welches für den Dieselkraftstoff durchlässig ist. Das Abscheiderohr 48 befindet sich innerhalb des Stützrohrs 44 in einem radialen Abstand zu diesem. Zwischen der radial äußeren Umfangsseite des Abscheiderohrs 48 und der radial inneren Umfangsseite des Stützrohrs 44 ist so ein umfangsmäßiger Abscheidespalt 54 realisiert, in welchem das vom Kraftstoff abgeschiedene Wasser nach unten in den Wassersammelraum 22 sinken kann. Das Abscheiderohr 48 reicht von der anschlussseitigen Endscheibe 40 bis zur bodenseitigen Endscheibe 42. Ein Innenraum des Abscheiderohrs 48 geht in den Innenraum des Auslassstutzens 30 über.

Die anschlussseitige Endscheibe 40 verfügt über eine zur Filterachse 12 koaxiale Durchstecköffnung 50, durch die der Auslassstutzen 30 hindurchführt. Das Abscheiderohr 48 weist eine Querschnittserweiterung auf, mit der es auf dem Auslassstutzen 30 steckt. Das Abscheiderohr 48 ist mittels zweier O-Ring-Dichtungen 52 radial innen gegen den Auslassstutzen 30 und radial außen gegen einen Zylinderabschnitt der anschlussseitigen Endscheibe 40 abgedichtet.

Die bodenseitige Endscheibe 42 weist eine zur Filterachse 12 koaxiale Öffnung 56 auf, deren Durchmesser etwas kleiner ist als der Innendurchmesser des Stützrohrs 44. Die Öffnung 56 ist von einem koaxialen Zylinderabschnitt umgeben, welcher sich auf der der anschlussseitigen Endscheibe 40 zugewandten Innenseite der bodenseitigen Endscheibe 42 befindet. Die Öffnung 56 verbindet den Abscheidespalt 54 mit dem Wassersammelraum 22.

Die radial äußere Umfangsseite der bodenseitigen Endscheibe 40 liegt dicht an der radial inneren Umfangsseite des Filterdeckels 18 an. Eine O-Ring-Dichtung 58 dichtet die bodenseitige Endscheibe 42 gegen die radial innere Umfangsseite des Filterdeckels 18 ab.

Eine Mehrzahl von Abstandshaltern 60, welche einstückig an dem Boden des Filterdeckels 18 angeformt sind, stützen sich gegen die dem Filtermedium 38 abgewandte Außenseite der bodenseitigen Endscheibe 42 ab. Ein weiterer Abstandshalter 62 ist einstückig mit der Trennwand 26 verbunden und stützt sich gegen die dem Filtermedium 38 abgewandte Außenseite der anschlussseitigen Endscheibe 40 ab. Das Rundfilterelement 36 wird so durch die Abstandshalter 60 und 62 axial zur Filterachse 12 in Position gehalten.

Der Außendurchmesser der anschlussseitigen Endscheibe 40 ist kleiner als der Innendurchmesser des Filtertopfs 16 dort. Auf diese Weise ist ein umfangsmäßiger Durchtrittsspalt 64 realisiert, welcher eine Einlasskammer 66 im oberen Bereich des Filtertopfs 16 mit einem Einlassringraum 68 verbindet. Der Einlassringraum 68 umgibt das Filtermedium 38 radial außen an dessen Rohseite. Die Einlassöffnung 34 mündet in die Einlasskammer 66.

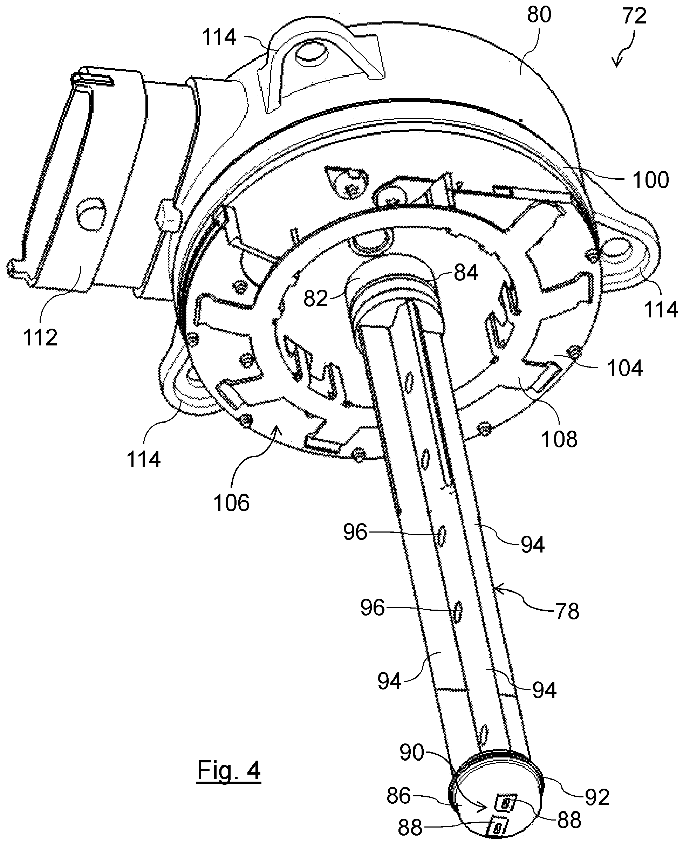

Auf der dem Innenraum 20 abgewandten Außenseite der Trennwand 26 ist einstückig ein Aufnahmestutzen 70 für ein Heiz-Sensor-Modul 72 angeordnet. Das Heiz-Sensor-Modul 72 ist in Figur 4 im Detail gezeigt. Die radial innere Umfangsseite des Aufnahmestutzens 70 ist zylindrisch und koaxial zur Filterachse 12. Der Innendurchmesser des Aufnahmestutzens 70 ist etwas kleiner als der Innendurchmesser des Filtertopfs 16.

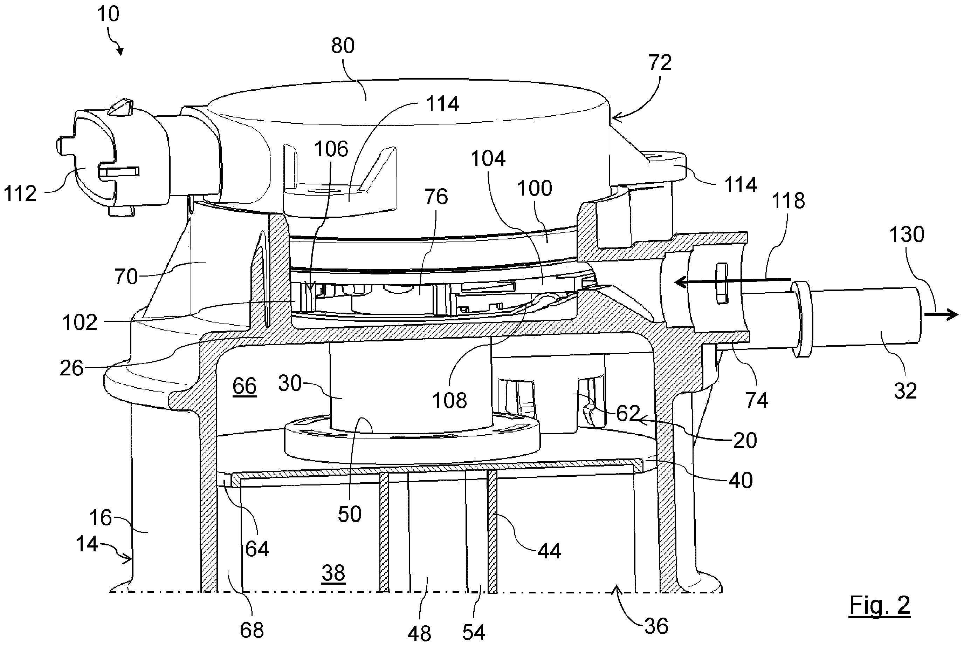

Durch die Umfangswand des Aufnahmestutzens 70 führt ein Einlassstutzen 74 für Kraftstoff. Der Einlassstutzen 74 ist in den Figuren 2 und 3 gezeigt. Eine gedachte Achse des Einlassstutzens 74 verläuft in Richtung einer Sekante zu einem gedachten Umfangskreis des Aufnahmestutzens 70. Auf diese Weise erlangt der zugeführte Kraftstoff innerhalb des Aufnahmestutzens 70 einen etwa wirbelartigen Strömungsverlauf.

Koaxial zur Filterachse 12 ist ein Montagestutzen 76 einstückig an der dem Innenraum 20 abgewandten Außenseite der Trennwand 26 angeordnet. Der Innendurchmesser des Montagestutzens 76 entspricht dem Innendurchmesser der Durchstecköffnung 28 und ist kleiner als der Innendurchmesser des Auslassstutzens 30. Der Montagestutzen 76 und die Durchstecköffnung 28 dienen der Aufnahme eines Sensorstabes 78 des Heiz-Sensor-Moduls 72. Der Sensorstab 78 ist unten an einem Modulgehäuse 80 des Heiz-Sensor-Moduls 72 befestigt. Das Modulgehäuse 80 ist aus einem elektrisch nicht leitfähigen Kunststoff. An seinem dem Modulgehäuse 80 zugewandten Ende verfügt der Sensorstab 78 über einen kreiszylindrischen Dichtabschnitt 82. Der Dichtabschnitt 82 steckt in dem Montagestutzen 76. In der radial äußeren Umfangsseite des Dichtabschnitts 82 ist eine Dichtungsnut angeordnet, in der sich eine O-Ring-Dichtung 84 befindet. Die O-Ring-Dichtung 84 dichtet den Dichtabschnitt 82 gegen den Montagestutzen 76 ab.

Der Sensorstab 78 erstreckt sich koaxial zur Filterachse 12 nach unten bis in den Wassersammelraum 22. An seinem dortigen freien Ende weist er einen etwa kreiszylindrischen Sensorabschnitt 86 auf, an dessen freier Stirnseite zwei Sensorelemente 88 eines Wasserstandssensors 90 angeordnet sind. Die Sensorelemente 88 sind insbesondere in den Figuren 3 und 4 dargestellt. Der Sensorabschnitt 86 trägt an seiner radial äußeren Umfangsseite eine O-Ring-Dichtung 92. Die O-Ring-Dichtung 92 stützt sich an einer entsprechenden umfangsmäßigen Dichtfläche an einer radial inneren Umfangsseite des Abscheiderohrs 48 im Bereich von dessen freiem Ende dicht ab.

Zwischen dem Dichtabschnitt 82 und dem Sensorabschnitt 86 hat der Sensorstab 78 ein kreuzförmiges Profil. Zwischen den radial äußeren Seiten der Flügel 94 und der radial inneren Umfangsseite des Abscheiderohrs 48 verbleibt jeweils ein Spalt, durch die Kraftstoff strömen kann. In den Flügeln 94 verlaufen in den Figuren 1 bis 4 nicht gezeigte Signalleitungen, welche die Sensorelemente 88 mit einer Steuerelektronik 98 des Heiz-Sensor-Moduls 72 verbinden. Zwei von insgesamt vier kreuzförmig angeordneten Flügeln 94 des Sensorstabes 78 haben eine Mehrzahl von Durchtrittslöchern 96, die ein Halten und Positionieren der Signalleitungen während des Spritzvorganges durch Stifte im Spritzgusswerkzeug ermöglichen. Die Steuerelektronik 98 ist in dem Modulgehäuse 80 angeordnet. Der besseren Übersichtlichkeit wegen ist die Steuerelektronik 98 in Figur 1 lediglich durch ein Kreuz angedeutet.

An der radial äußeren Umfangswand des Modulgehäuses 80 ist eine umfangsmäßige Dichtungsnut mit einer O-Ring-Dichtung 100 angeordnet, welche das Modulgehäuse 80 gegen den Aufnahmestutzen 70 abdichtet. Das Modulgehäuse 80 ist mittels Montagestutzen 70 in einem axialen Abstand zu der Trennwand 26 gehalten. Auf diese Weise ist radial innerhalb des Aufnahmestutzens 70 eine Heizkammer 102 realisiert, welche durch die Umfangswand des Aufnahmestutzens 70, die Außenseite der Trennwand 26, die radial äußere Umfangsseite des Montagestutzens 76 und eine der Trennwand 26 zugewandte Unterseite des Modulgehäuses 80 begrenzt ist.

In der Heizkammer 102 befinden sich Heizelemente 104 einer Heizeinrichtung 106 des Heiz-Sensor-Moduls 72. Die Heizeinrichtung 106 dient zum Erwärmen des Kraftstoffs in der Heizkammer 102, bevor dieser zur Rohseite des Filtermediums 38 gelangt. Die Heizelemente 104 sind elektrisch betriebene Heizplatten in Sandwichbauweise. Die Heizplatten sind so angeordnet, dass sie labyrinthartige Strömungskanäle für den Kraftstoff begrenzen. Die Heizelemente 104 sind, wie in Figur 4 gezeigt, mittels eines Federrings 108 an der Unterseite des Modulgehäuses 80 befestigt. Elektrische Kontakte zum Betreiben der Heizelemente 104 führen durch die Unterseite des Modulgehäuses 80 hindurch zur Steuerelektronik 98.

An der Unterseite des Modulgehäuses 80 ist ferner ein Temperatursensor 110 angeordnet. Der Temperatursensor 110 ist in Figur 3 angedeutet. Der Temperatursensor 110 umfasst vorzugsweise einen elektrischen Widerstand mit einem negativen Temperaturkoeffizienten (NTC-Widerstand). Der Temperatursensor 110 befindet sich in der Heizkammer 102 unmittelbar neben der Einlassöffnung des Einlassstutzens 74. Er kann so von dem einströmenden Kraftstoff direkt angeströmt werden. Auf diese Weise kann die Temperatur des einströmenden Kraftstoffs direkt ermittelt werden. Der Temperatursensor 110 ist mit nicht gezeigten elektrischen Sensorleitungen, welche durch die Unterseite des Modulgehäuses 80 hindurchführen, mit der Steuerelektronik 98 verbunden.

Außerhalb des Aufnahmestutzens 70 ist in der Umfangswand des Modulgehäuses 80 eine Steckereinrichtung 112 für elektrische Anschlüsse angeordnet, welche mit der Steuerelektronik 98 verbunden sind. In die Steckereinrichtungen 112 kann eine entsprechende Steckverbindung eingesteckt werden, mit der elektrische Versorgungsleitungen und elektrische Signalleitungen beispielsweise mit einer Motorsteuerung der Brennkraftmaschine verbunden werden können.

Außerdem sind an der radial äußeren Umfangsseite des Modulgehäuses 80 mehrere Schraubflansche 114 für nicht gezeigte Verbindungsschrauben angeordnet. Die Verbindungsschrauben können in entsprechende Gewindelöcher 116 eingeschraubt werden, welche sich radial außerhalb des Aufnahmestutzens 70 am Filterkopf 16 befinden. Mittels der Schraubflansche 114, der Gewindelöcher 116 und der Schrauben ist das Heiz-Sensor-Modul 72 an dem Filtergehäuse 14 lösbar fixiert.

Beim Betrieb der Brennkraftmaschine strömt der zu reinigende Kraftstoff durch den Einlassstutzen 74, in Figur 2 angedeutet durch einen Pfeil 118, in die Heizkammer 102. In der Heizkammer 102 strömt der Kraftstoff zunächst entlang eines etwa wirbelartigen Strömungswegs. Durch den wirbelartigen Strömungsweg wird der Kraftstoff optimal in der Heizkammer 102 verteilt. Mit dem Temperatursensor 110 wird die Temperatur des einströmenden Kraftstoffs erfasst und über die entsprechenden Signalleitungen an die Steuerelektronik 98 übermittelt. Ist die Temperatur des Kraftstoffs geringer als eine in der Steuerelektronik 98 vorgegebene Grenztemperatur, steuert die Steuerelektronik 98 die Heizeinrichtung 106 an, sodass die Heizelemente 104 aufgeheizt werden. Der Kraftstoff wird durch die labyrinthartigen Strömungswege an den Heizelementen 104 entlang geführt. Dabei wird der Kraftstoff erwärmt.

Der erwärmte Kraftstoff gelangt durch die Einlassöffnung 34, in Figur 1 angedeutet durch einen Pfeil 120, in die Einlasskammer 66. Von dort aus strömt der Kraftstoff in den Einlassringraum 68. Der Kraftstoff durchströmt das Filtermedium 38 von dessen Rohseite, radial außen, zu dessen Reinseite, radial innen, in Figur 1 angedeutet durch Pfeile 122. Der gefilterte Kraftstoff gelangt durch die Öffnungen des Stützrohrs 44 in den Abscheidespalt 54. Das in dem Kraftstoff enthaltene Wasser wird an der radial äußeren Umfangsseite des Abscheiderohrs 48 abgeschieden, sinkt aufgrund der Schwerkraft, in Figur 1 angedeutet durch einen gestrichelten Pfeil 124, in den Wassersammelraum 22 und wird dort gesammelt.

Der vom Wasser befreite Kraftstoff durchströmt das Abscheiderohr 48 von radial außen nach innen, angedeutet durch einen Pfeil 126, und gelangt nach oben, angedeutet durch einen Pfeil 128, in den Innenraum des Auslassstutzens 30. Von dort aus fließt der Kraftstoff in das Auslassrohr 32 und gelangt, in Figur 1 angedeutet durch einen Pfeil 130, aus dem Filtergehäuse 14 heraus in die nicht gezeigte Kraftstoffableitung.

Sobald der Wasserstand des im Wassersammelraum 22 gesammelten Wassers die Sensorelemente 88 des Wasserstandssensors 90 erreicht, wird dies über die Sensorleitungen an die Steuerelektronik 98 übermittelt. Die Steuerelektronik 98 kann dann ein entsprechendes Steuersignal an die Motorsteuerung abgeben. Sofern die Ablassvorrichtung 24 eine automatische Ablaufsteuerung aufweist, kann diese mit der Motorsteuerung angesteuert werden, um das Wasser abzulassen. Alternativ oder zusätzlich kann über die Motorsteuerung beispielsweise ein Ausgabeelement im Cockpit des Kraftfahrzeugs zur Ausgabe eines optischen und/oder akustischen Warnsignals angesteuert werden, um darauf hinzuweisen, dass der Wassersammelraum 22 geleert werden muss.

Bei dem oben beschriebenen Ausführungsbeispiel eines Kraftstofffilters 10 sind unter anderem folgende Modifikationen möglich:
Die Erfindung ist nicht beschränkt auf einen Kraftstofffilter 10 für Dieselkraftstoff. Vielmehr kann sie auch für andersartige Kraftstoffe eingesetzt werden. Außerdem kann die Erfindung auch außerhalb der Kraftfahrzeugtechnik, beispielsweise bei Industriemotoren, eingesetzt werden.

Das Modulgehäuse 80 kann statt aus einem elektrisch nicht leitfähigen Kunststoff auch aus einem andersartigen, vorzugsweise elektrisch nichtleitendem Material sein.

Das Filtergehäuse 14 kann statt aus einem elektrisch leitfähigen Kunststoff auch aus einem andersartigen, vorzugsweise elektrisch leitfähigem Material, beispielsweise einem Metall, sein. Es kann auch aus einem elektrisch nicht leitfähigen Material sein.

Der Temperatursensor 110 kann anstelle des NTC-Widerstandes auch ein anderes Temperaturerfassungselement aufweisen. Der Temperatursensor 110 kann auch weiter entfernt von der Einlassöffnung des Einlassstutzens 74 angeordnet sein. Er kann auch außerhalb der Heizkammer 102 angeordnet sein. Es können auch mehrere Temperatursensoren 110 vorgesehen sein.

Anstelle des in Sandwichbauweise aufgebauten Heizelements 104 kann auch ein andersartiges Heizelement vorgesehen sein. Es können auch mehrere Heizelemente vorgesehen sein.

Statt des labyrinthartigen Strömungsverlaufs kann mit dem Heizelement 104 auch ein andersartiger Strömungsverlauf vorgegeben werden.

Statt des Wasserstandssensors 90 mit den Sensorelementen 88 kann auch ein andersartiger Wasserstandssensor vorgesehen sein. Es können auch mehrere Wasserstandssensoren vorgesehen sein. Der Wasserstandssensor 90 kann statt am Ende des Sensorstabes 78 auch an einer anderen Stelle im Wassersammelraum 23 angeordnet sein.

Die radial innere Umfangsseite des Aufnahmestutzens 70 und die radial äußere Umfangsseite des Modulgehäuses 80 können statt eines runden auch einen andersartigen Querschnitt, beispielsweise einen ovalen Querschnitt haben. Es kann auch ein eckiger Querschnitt vorgesehen sein. Die radial innere Umfangsseite des Aufnahmestutzens 70 und die radial äußere Umfangsseite des Modulgehäuses 80 können auch konisch sein.

Statt mit den Schraubflanschen 114, den Verbindungsschrauben und den Gewindelöchern 116 kann das Heiz-Sensor-Modul 72 auch in andersartiger Weise, beispielsweise mit einer Klipsverbindung, einer andersartigen Schraubverbindung oder einer bajonettartigen Verbindung, lösbar mit dem Filtergehäuse 14 verbunden sein. Das Heiz-Sensor-Modul 72 kann statt lösbar auch fest mit dem Filtergehäuse 14 verbunden, beispielsweise verklebt, verpresst oder verschweißt, sein.

Statt in den Aufnahmestutzen 70 eingesteckt zu sein, kann das Modulgehäuse 80 auch auf den Aufnahmestutzen 70 aufgelegt oder auf diesen aufgesteckt sein.

Das Rundfilterelement 36 kann statt von radial außen nach innen auch in umgekehrter Richtung durchströmbar sein. In diesem Fall sind die Einlassöffnung 34 und das Auslassrohr 32 mit den entsprechenden fluidleitenden Verbindungen entsprechend angepasst.

Es kann auch mehr als eine Einlassöffnung 34 und/oder ein Auslassrohr 32 vorgesehen sein.

Anstelle des Rundfilterelements 36 kann auch ein andersartiges Filterelement, beispielsweise ein Filterelement mit einem ovalen oder eckigen Querschnitt oder mit einer konischen Form, vorgesehen sein.

Anstelle des zickzackförmig gefalteten Filtermediums 38 kann auch ein andersartiges, umfangsmäßig geschlossenes Filtermedium vorgesehen sein.

Anstelle des Abscheiderohrs 48 kann auch eine andersartige Abscheidevorrichtung zum Abscheiden von Wasser vorgesehen sein.

## Patentansprüche

1. Kraftstofffilter, insbesondere Dieselkraftstofffilter (10), einer Brennkraftmaschine insbesondere eines Kraftfahrzeugs, mit einem Filtergehäuse (14), welches wenigstens einen Einlass (74) für den zu reinigenden Kraftstoff und wenigstens einen Auslass (32) für den gereinigten Kraftstoff aufweist und in dessen Innenraum (20) ein Filterelement (36) so angeordnet ist, dass es den wenigstens einen Einlass (74) von dem wenigstens einen Auslass (32) trennt, mit wenigstens einer Heizeinrichtung (106) zur Erwärmung des Kraftstoffs, mit wenigstens einem Temperatursensor (110) zur Erfassung einer Temperatur des Kraftstoffs und mit wenigstens einem Wasserstandssensor (90) zur Erfassung eines Wasserstandes von aus dem Kraftstoff abgeschiedenem Wassers in einem Wassersammelraum (22), wobei die wenigstens eine Heizeinrichtung (106), der wenigstens eine Temperatursensor (110) und der wenigstens eine Wasserstandssensor (90) in einem Heiz-Sensor-Modul (72) integriert sind, **dadurch gekennzeichnet, dass** wenigstens ein Heizelement (104) der Heizeinrichtung (106) in einer Heizkammer (102) angeordnet ist, die sich außerhalb des Innenraums (20) des Filtergehäuses (14) bezüglich einer Kraftstoffströmung (118, 120) zwischen dem Einlass (74) und einer Rohseite des Filterelements (36) befindet, wobei die Heizkammer (102) durch die Außenseite des Filtergehäuses (14) mit begrenzt ist und die mit einem Modulgehäuse (80) des Heiz-Sensor-Moduls (72) mit begrenzt wird.

2. Kraftstofffilter nach Anspruch 1, **dadurch gekennzeichnet, dass** der wenigstens eine Temperatursensor (110) in der Nähe des wenigstens einen Einlasses (74), vorzugsweise in der Heizkammer (102), insbesondere bezüglich des Strömungsweges (118, 120) des Kraftstoffs in der Heizkammer (102) näher an dem wenigstens einen Einlass (74) als an einer Auslassöffnung (34) der Heizkammer (102), angeordnet ist.

3. Kraftstofffilter nach Anspruch 1 und 2, **dadurch gekennzeichnet, dass** wenigstens ein Heizelement (104) der Heizeinrichtung (106) in Sandwichbauweise realisiert ist.

4. Kraftstofffilter nach einem der vorigen Ansprüche, **dadurch gekennzeichnet, dass** wenigstens ein Heizelement (104) der Heizeinrichtung (106) einen für den zu erwärmenden Kraftstoff labyrinthartig durchströmbaren Aufbau hat.

5. Kraftstofffilter nach einem der vorigen Ansprüche, **dadurch gekennzeichnet, dass** das Modulgehäuse (80) des Heiz-Sensor-Moduls (72) elektrisch nicht leitfähig ist.

6. Kraftstofffilter nach einem der vorigen Ansprüche, **dadurch gekennzeichnet, dass** das Heiz-Sensor-Modul (72) im Einbauzustand des Kraftstofffilters vorzugsweise von oben in oder auf eine Aufnahme (70) des Filtergehäuses (14) gesteckt oder gelegt ist.

7. Kraftstofffilter nach einem der vorigen Ansprüche, **dadurch gekennzeichnet, dass** das Heiz-Sensor-Modul (72) wenigstens eine elektrische Anschlusseinrichtung (112) für elektrische Versorgungsleitungen und/oder Signalleitungen der wenigstens einen Heizeinrichtung (106), des wenigstens einen Temperatursensors (110) und des wenigstens einen Wasserstandssensors (90), insbesondere für elektrische Versorgungsleitungen und/oder Signalleitungen einer Steuerelektronik (98) der wenigstens einen Heizeinrichtung (106), des wenigstens einen Temperatursensors (110) und/oder des wenigstens einen Wasserstandssensors (90), die im Modulgehäuse (80) angeordnet ist, aufweist.

8. Heiz-Sensor-Modul (72) eines Kraftstofffilters, insbesondere Dieselkraftstofffilters (10), einer Brennkraftmaschine, insbesondere eines Kraftfahrzeugs, mit wenigstens einer Heizeinrichtung (106) zur Erwärmung des Kraftstoffs, mit wenigstens einem Temperatursensor (110) zur Erfassung einer Temperatur des Kraftstoffs, mit wenigstens einem Wasserstandssensor (90) zur Erfassung eines Wasserstandes von abgeschiedenem Wasser in einem Wassersammelraum (22), **dadurch gekennzeichnet, dass** ein Modulgehäuse (80) des Heiz-Sensor-Moduls (72) ausgestaltet ist, um eine Heizkammer (102) außerhalb eines Innenraums (20) eines Filtergehäuses (14) des Kraftstofffilters (10) an einer Außenseite des Filtergehäuses (14) mit zu begrenzen, die bezüglich einer Kraftstoffströmung (118, 120) zwischen einem Einlass (74) und einer Rohseite eines Filterelements (36) des Kraftstofffilters (10) angeordnet ist, und wenigstens ein Heizelement (104) der Heizeinrichtung (106) so an dem Modulgehäuse (80) angeordnet ist, dass es sich bei montiertem Heiz-Sensor-Modul (72) in der Heizkammer (102) befindet.

## Claims

1. Fuel filter, in particular Diesel fuel filter (10), of an internal combustion engine in particular of a motor vehicle, with a filter housing (14) which features at least one inlet (74) for the fuel to be purified and at least one outlet (32) for the purified fuel and in the interior space (20) of which a filter element (36) is disposed in such a way that it separates the at least one inlet (74) from the at least one outlet (32), with at least one heating means (106) for heating the fuel, with at least one temperature sensor (110) for detecting a temperature of the fuel and with at least one water level sensor (90) for detecting a water level of water separated from the fuel in a water-collecting chamber (22), wherein the at least one heating means (106), the at least one temperature sensor (110) and the at least one water level sensor (90) are integrated in a heating sensor module (72), **characterized in that** at least one heating element (104) of the heating means (106) is disposed in a heating chamber (102) which is located outside of the interior space (20) of the filter housing (14) relative to a fuel flow (118, 120) between the inlet (74) and a raw side of the filter element (36), wherein the heating chamber (102) is delimited by the exterior side of the filter housing (14) and which is delimited by a module housing (80) of the heating sensor module (72).

2. Fuel filter according to claim 1, **characterized in that** the at least one temperature sensor (110) is disposed near the at least one inlet (74), preferably in the heating chamber (102), in particular relative to the flow path (118, 120) of the fuel in the heating chamber (102) closer to the at least one inlet (74) than to an outlet port (34) of the heating chamber (102).

3. Fuel filter according to claim 1 and 2, **characterized in that** the at least one heating element (104) of the heating means (106) is realized in sandwich construction.

4. Fuel filter according to one of the above claims, **characterized in that** at least one heating element (104) of the heating means (106) has a structure through which the fuel to be heated can pass through in a labyrinth-like manner.

5. Fuel filter according to one of the above claims, **characterized in that** the module housing (80) of the heating sensor module (72) is electrically nonconductive.

6. Fuel filter according to one of the above claims, **characterized in that** the heating sensor module (72) is preferably inserted or placed from above in or on a receptacle (70) of the filter housing (14) when the fuel filter is installed.

7. Fuel filter according to one of the above claims, **characterized in that** the heating sensor module (72) features at least one electrical connecting device (112) for electrical supply lines and/or signal lines of the at least one heating means (106), of the at least one temperature sensor (110) and of the at least one water level sensor (90), in particular for electrical supply lines and/or signal lines of a control electronics (98) of the at least one heating means (106), of the at least one temperature sensor (110) and/or of the at least one water level sensor (90), which is disposed in the module housing (80).

8. Heating sensor module (72) of a fuel filter, in particular of a Diesel fuel filter (10), of an internal combustion engine, in particular of a motor vehicle, with at least one heating means (106) for heating the fuel, with at least one temperature sensor (110) for detecting a temperature of the fuel, with at least one water level sensor (90) for detecting a water level of separated water in a water-collecting chamber (22), **characterized in that** a module housing (80) of the heating sensor module (72) is designed to delimit a heating chamber (102) outside of an interior space (20) of a filter housing (14) of the fuel filter (10) on an exterior side of the filter housing (14) which is disposed relative to a fuel flow (118, 120) between an inlet (74) and a raw side of a filter element (36) of the fuel filter (10), and that at least one heating element (104) of the heating means (106) is disposed at the module housing (80) in such a way that it is located in the heating chamber (102) when the heating sensor module (72) is mounted.

## Revendications

1. Filtre à carburant, notamment filtre à gazole (10), d'un moteur à combustion interne notamment d'un véhicule automobile, avec un boîtier de filtre (14) qui présente au moins une entrée (74) pour le carburant à purifier et au moins une sortie (32) pour le carburant purifié et dans l'espace intérieur (20) duquel est disposé un élément filtrant (36) de telle sorte qu'il sépare l'entrée (74), au moins au nombre d'une, de la sortie (32), au moins au nombre d'une, avec au moins un dispositif de chauffage (106) pour chauffer le carburant, avec au moins un capteur de température (110) pour détecter une température du carburant et avec au moins un capteur de niveau d'eau (90) pour détecter un niveau d'eau d'une eau séparée du carburant dans un collecteur d'eau (22), le dispositif de chauffage (106), au moins au nombre d'un, le capteur de température (110), au moins au nombre d'un, et le capteur de niveau d'eau (90), au moins au nombre d'un, étant intégrés dans un module de capteur de chauffage (72), **caractérisé en ce qu'**au moins un élément de chauffage (104) du dispositif de chauffage (106) est disposé dans une chambre de chauffe (102) qui se trouve à l'extérieur d'un espace intérieur (20) d'un boîtier de filtre (14) par rapport à un flux de carburant (118, 120) entre l'entrée (74) et un côté brut de l'élément filtrant (36), la chambre de chauffe (102) étant délimitée par la face externe du boîtier de filtre (14) et qui étant délimitée par un boîtier de module (80) du module de capteur de chauffage (72).

2. Filtre à carburant selon la revendication 1, **caractérisé en ce que** le capteur de température (110), au moins au nombre d'un, est disposé à proximité de l'entrée (74), au moins au nombre d'une, de préférence dans la chambre de chauffe (102), notamment par rapport à la voie d'écoulement (118, 120) du carburant dans la chambre de chauffe (102) plus proche à l'entrée (74), au moins au nombre d'une, qu'à un orifice de sortie (34) de la chambre de chauffe (102).

3. Filtre à carburant selon la revendication 1 et 2, **caractérisé en ce qu'**au moins un élément de chauffage (104) du dispositif de chauffage (106) est réalisé en construction sandwich.

4. Filtre à carburant selon l'une des revendications précédentes, **caractérisé en ce qu'**au moins un élément de chauffage (104) du dispositif de chauffage (106) présente une structure dans lequel le carburant à chauffer peut passer à travers comme dans un labyrinthe.

5. Filtre à carburant selon l'une des revendications précédentes, **caractérisé en ce que** le boîtier de module (80) du module de capteur de chauffage (72) est électriquement non conducteur.

6. Filtre à carburant selon l'une des revendications précédentes, **caractérisé en ce que** le module de capteur de chauffage (72) est de préférence inséré ou placé par le haut dans ou sur un réceptacle (70) du boîtier de filtre (14) lorsque le filtre à carburant est installé.

7. Filtre à carburant selon l'une des revendications précédentes, **caractérisé en ce que** le module de capteur de chauffage (72) présente au moins un dispositif de connexion électrique (112) pour des lignes d'alimentation électrique et/ou des circuits d'acheminement des signaux du dispositif de chauffage (106), au moins au nombre d'un, du capteur de température (110), au moins au nombre d'un, et du capteur de niveau d'eau (90), au moins au nombre d'un, notamment pour des lignes d'alimentation électrique et/ou des circuits d'acheminement des signaux d'une électronique de commande (98) du dispositif de chauffage (106), au moins au nombre d'un, du capteur de température (110), au moins au nombre d'un, et/ou du capteur de niveau d'eau (90), au moins au nombre d'un, qui est disposé dans le boîtier de module (80).

8. Module de capteur de chauffage (72) d'un filtre à carburant, notamment d'un filtre à gazole (10), d'un moteur à combustion interne, notamment d'un véhicule automobile, avec au moins un dispositif de chauffage (106) pour chauffer le carburant, avec au moins un capteur de température (110) pour détecter une température du carburant, avec au moins un capteur de niveau d'eau (90) pour détecter un niveau d'eau d'une eau séparée dans un collecteur d'eau (22), **caractérisé en ce qu'**un boîtier de module (80) du module de capteur de chauffage (72) est conçu pour délimiter une chambre de chauffe (102) à l'extérieur d'un espace intérieur (20) d'un boîtier de filtre (14) du filtre à carburant (10) sur une face externe du boîtier de filtre (14) qui est disposée par rapport à un flux de carburant (118, 120) entre une entrée (74) et un côté brut d'un élément filtrant (36) du filtre à carburant (10), et qu'au moins un élément de chauffage (104) du dispositif de chauffage (106) est disposé sur le boîtier de module (80) de telle sorte qu'il est situé dans la chambre de chauffe (102) lorsque le module de capteur de chauffage (72) est monté.
